# EUROPEAN PATENT SPECIFICATION

(11) **EP 0 619 393 B1**
(45) Date of publication and mention of the grant of the patent: **10.09.1997**
(21) Application number: 94302383.8
(22) Date of filing: 05.04.1994
(51) Int. Cl.: D04H 1/42

(54) **Nonwoven materials made from fine decitex cardable polyolefin fibers**
Vliesstoff hergestellt aus Kardierbaren Polyolefinfasern von kleinen Decitex
Matériaux non tissés réalisés à partir de fibres de polyoléfine cardées de faible titrage

(30) Priority: 06.04.1993 GB 9307117; 29.10.1993 US 145360
(43) Date of publication of application: 12.10.1994
(73) Proprietor: HERCULES INCORPORATED, Wilmington, Delaware 19894-0001 (US)
(72) Inventor: Gupta, Rakesh Kumar, Conyers, Georgia 30208 (US); Legare, Richard Jean, Conyers, Georgia 30208 (US)
(74) Representative: De Minvielle-Devaux, Ian Benedict Peter

(56) References cited:
- EP-A- 0 296 572
- EP-A- 0 367 989
- EP-A- 0 486 158
- EP-A- 0 516 412
- US-A- 4 868 031
- US-A- 5 108 827

## Description

This invention relates to nonwoven materials made from polyolefin fibers, and to laminates incorporating these materials.

Nonwoven web structures are generally produced using three basic processes: (1) spunbonding, where continuous filaments are extruded and deposited on a screen to form a continuous nonwoven structure; (2) meltblowing, where the extruded polymer melt is stretched, broken into short fibers, blown by a jet of heated air, and deposited on a belt to form the nonwoven structure; and (3) carding, where staple fibers are separated by a carding machine and laid out in a nonwoven web structure.

Nonwoven materials are commonly used in the manufacture of protective garments such as those worn by medical personnel, clean room personnel, and farm workers. For example, U.S. Patent 5,108,827 discloses a thermally-bonded nonwoven fabric that is made from a web comprising 100 to 5 weight percent multiconstituent fibers. The fibers are made from a dispersion of two or more polymers that can be melt spun into fibers and then formed into webs, e.g., by carding, airlaying, or wetlaying. Biconstituent staple fibers made from a blend of ethylene/1-octene and polypropylene can be used.

Nonwoven materials to be used in the manufacture of such protective garments have two essential requirements: liquid barrier properties, and comfort to the wearer. Most of the liquid barrier fabrics currently available exhibit very low air permeability, causing heat build-up and therefore heat stress for the garment wearer. Some currently available fabrics such as spunbonded materials provide adequate air flow, but lack the required liquid barrier properties. There is a need for a nonwoven material that exhibits a combination of impermeability to liquids and high air permeability.

EP-A-486 158 relates to a process for preparing polyolefin-containing high crimp spun fiber or filament suitable for nonwoven material of high hydrophobicity using certain topically applied finishes. A variety of nonwoven materials may be produced utilizing webs obtained, for instance, from carded staple.

The fabrics of the present invention comprise at least one carded nonwoven web which comprises at least 10% by weight, based on the total weight of cardable fibers, of cardable polyolefin staple fibers having a fiber fineness of 0.5 to 1.2 decitex, and such fabrics have a liquid strike-through resistance (mm of H₂O) of at least 150 millimeters and an air permeability of at least 40.6 cm³/cm²/sec (80 cubic feet per minute), preferably at least 50.8 cm³/cm²/sec (100 cubic feet per minute). Preferably the polyolefin fibers have a hydrophobic surface. Preferably the fabric is thermally bonded.

Also according to the invention, the cardable pollyolefin fibers having the specified fiber fineness can be blended with other cardable fibers, including polyolefin fibers having a fiber fineness greater than or less than 0.5 to 1.2 decitex, and cardable fibers other than polyolefin fibers.

Also according to the invention, the fabrics of this invention can be combined in a laminate structure with webs of other nonwoven materials, including webs made from polyolefin fibers having a different fiber fineness, webs made from cardable fibers other than polyolefin fibers, and webs made from noncardable fibers. The fabrics of this invention can also be combined with polymer films, preferably breathable polyethylene or polypropylene films.

The fabrics of this invention and laminates comprising at least one layer of the fabrics of this invention in combination with another nonwoven material provide a unique combination of good liquid barrier properties and high air permeability.

The fabrics of this invention comprise at least one carded nonwoven web comprising at least 10%, preferably at least 20%, and most preferably at least 40% cardable polyolefin staple fibers having a fiber fineness of 0.5 to 1.2 decitex. Preferably the cardable polyolefin fibers have a fiber fineness of 0.7 to 1.2 decitex, most preferably 0.8 to 1.0 decitex. Decitex is the weight in grams of 10,000 meters of each fiber. The staple fibers are preferably 2.5 to 15.25 cm (1 to 6 inches) long, more preferably 2.5 to 7.6 cm (1 to 3 inches), and most preferably 3.2 to 5 cm (1.25 to 2 inches) long.

The polyolefin staple fibers suitable for use in this invention can be splittable or fibrillated and preferably have a hydrophobic surface. The polyolefin fibers can be made from either linear or branched polyolefins. Suitable cardable polyolefin fibers include polypropylene fibers, including atactic, syndiotactic and isotactic polypropylenes; polyethylene fibers, including low density, high density and linear low density polyethylenes, and fibers made from copolymers of 1-olefins such as, for example, ethylene, propylene, butene, octene, and hexene, e.g., a copolymer of ethylene and propylene. Preferred polyolefin fibers are polypropylene fibers having a hydrophobic surface. If multicomponent sheath/core fibers are used, the fibers preferably have the polyolefin in the sheath. The core can be a polyolefin or another polymer such as, for example, a polyamide or polyester. The preferred multicomponent fibers are sheath/core bicomponent fibers.

The fabrics can be made entirely from cardable polyolefin staple fibers having a fiber fineness of 0.5 to 1.2 decitex, or these polyolefin fibers can be blended with other cardable fibers, including polyolefin fibers having a fiber fineness greater than or less than 0.5 to 1.2 decitex, and cardable fibers other than polyolefin fibers. The fibers should preferably be uniformly dispersed during the blending process in order to maintain the desired combination of impermeability to liquids and high air permeability. The other cardable fibers can be multicomponent or multiconstituent fibers. Examples of multicomponent fibers are sheath/core and side-by-side fibers, where each component of the fiber is spun from a single polymer. Multiconstituent fibers are spun from a polymer melt that is a blend of polymers. If the other cardable fibers are not hydrophobic, they should preferably be treated to make them hydrophobic.

The other cardable fibers used in the blends can include hydrophilic fibers with fluorocarbon surface finishes, or fibers with fluorocarbons added to the melt from which the fiber was spun as described by Thompson et al., Tappi Journal, May 1992, pages 124-134. Alternatively, the fabrics made from blends of cardable polyolefin fibers and hydrophilic fibers can be post-treated with fluorocarbons. Suitable hydrophilic fibers include, for example, polyamide, polyester, rayon, and cellulosic fibers. A fluorocarbon is defined as a compound of carbon and fluorine, with or without hydrogen, analogous to a hydrocarbon in which all or nearly all of the hydrogen has been replaced by fluorine. Suitable fluorocarbon surface finishes include SCOTCHGUARD® FC, available from Minnesota Mining & Manufacturing Co., St. Paul, MN. Suitable fluorocarbon additives for the polymer melt include, for example, FX 1801 fluorocarbon additive available from Minnesota Mining & Manufacturing Co., St. Paul, Minnesota.

The cardable polyolefin staple fibers used in the preparation of the fabrics of this invention can be treated with a surface finish comprising an antistatic agent and a lubricant. Polyolefin fibers with such a finish are described, for example, in U.S. Patent 4,938,832, where the surface finish comprises a neutralized phosphoric acid ester and a polysiloxane.

Fibers useful in the practice of this invention are described, for example, in U.S. Patent 5,281,378 and published European Patent Applications 486,158; 516,412; 557,024 and 552,013.

The fabrics of this invention comprising at least one carded nonwoven web comprising at least 10% by weight of cardable polyolefin staple fibers having a fiber fineness of 0.5 to 1.2 decitex preferably have a liquid strike-through resistance (mm of H₂O) of at least 150 millimeters, most preferably at least 200 millimeters. These materials preferably also have an air permeability of at least 80 cubic feet per minute (40.6 cm³/cm²/sec), most preferably at least 100 cubic feet per minute (50.8 cm³/cm²/sec). The basis weight of the fabrics is preferably 10 to 100 g/m².

In the manufacture of the fabrics of this invention, the cardable fibers are carded using a series of sequentially arranged carding machines. The carded webs from the various machines are deposited on top of each other on a moving belt to form a layered web structure. This layered web structure is "the fabric of this invention" referred to in this specification.

The fabric of this invention can also be combined with one or more layers of other nonwoven materials such as webs of cardable polyolefin fibers having a fiber fineness greater than or less than 0.5 to 1.2 decitex; webs of cardable fibers other than polyolefin fibers; webs of noncardable fibers such as spunbonded, meltblown or hydroentangled webs, or with one or more layers of film, preferably breathable films. Other cardable fibers include, for example, polyamide, polyester, rayon and cotton fibers. If the other nonwoven material is not hydrophobic, it should preferably be treated to make it hydrophobic. Suitable films include, for example, polyethylene, polypropylene, polyester, and breathable polyethylene and polypropylene films. The other nonwoven material or film can be combined with the thermally bonded fabrics of this invention, or the fabrics of this invention can be combined with the other nonwoven materials or film before thermal bonding.

Any of these nonwoven materials can be consolidated to improve fabric strength using any one or a combination of techniques such as, for example, calender thermal bonding, through-air bonding, hydroentangling, needle-punching, ultrasonic bonding, and latex bonding.

Laminates comprising at least one layer of a fabric comprising at least one carded nonwoven web comprising at least 10% cardable polyolefin fibers having a fiber fineness of 0.5 to 1.2 decitex combined with at least one layer of another nonwoven material preferably have a liquid strike-through resistance (mm H₂O) of at least 150 millimeters, most preferably at least 200 millimeters. These laminates also preferably have an air permeability of at least 80 cubic feet per minute, most preferably at least 100 cubic feet per minute.

The fabrics of this invention can be used in any applications where a combination of good liquid barrier properties and high air permeability are required, e.g., filtration media, medical and clean room garments, CSR wrap, and absorbent article backsheets. They are particularly useful for protective clothing.

The liquid strike-through resistance (mm H₂O) of the fabrics of this invention is determined using a rising water column height test. This test subjects one side of a fabric to increasing water pressure, as indicated by the height of the distilled water column, until water droplets are observed on the other side of the fabric. The higher the height of the water column (pressure), the better the fabric's water barrier properties.

The procedure used for this test is as follows. A 10 cm x 10 cm fabric sample was mounted at the bottom of a transparent graduated cylinder having an inside diameter of 3.8 cm. Filtered demineralized water was pumped just above the fabric surface at the rate of 4.8 ml/second (an increase in water column height of 4.2 millimeters/second). The other side of the test fabric was observed for the first signs of water penetration. As soon as the first sign of water penetration was observed (indicated by a drop of water), the water column height was recorded. This procedure was repeated for five replicate samples. The average water column height for these five replicates represents the rising water column test value of the test fabric.

The air permeability of the fabric was measured using the ASTM D737-75 test procedure. The air permeability was measured in cubic feet per minute (CFM)/ft² against an air pressure drop of 0.5 inches (12.7 mm) of water across the fabric sample. Air permeability can also be expressed as cm³/cm²/sec by multiplying the CFM value by 0.508.

The grab strength of the fabrics was measured using the ASTM D1682-64 test procedure.

The web or fabric basis weight is the weight in grams of one square meter of web or fabric.

The fiber fineness is expressed in terms of decitex. Decitex is defined as the weight in grams of a 10,000 meter length of a fiber. A lower decitex (dtex) value indicates a finer fiber. The fiber decitex can be determined either by direct weight measurement or by indirect means such as calculations based on the cross-sectional area of the fiber and the fiber density.

The polypropylene fibers used in the examples were hydrophobic Type 190, Type 195, and Type 211 fibers available from Hercules Incorporated, Wilmington, DE. The pigmented fibers, as denoted by color, contained normal amounts of pigments as used in the art, i.e., up to 5% based on the total weight of the fibers.

### Example 1

Nonwoven webs were produced by using a series of sequentially arranged carding machines that were supplied with polypropylene hydrophobic staple fibers (Types 190, 195, and 211) having a cut length of 3.8 cm and with the fineness indicated in the following table. These staple fibers were carded by the carding machines, and carded webs were deposited on top of each other on the moving belt to form a layered web structure for in-line thermal consolidation at a line speed of 23 to 30 meters/minute. The basis weight of individual webs was varied as indicated in the tables to make composite structures. The thermal consolidation was carried out by using heated calender rolls with a point pattern and a total bond area of 15%. The temperature of the calender rolls is also indicated. The decitex (dtex) and the percent of the total weight of fibers supplied to each carding machine are given in Table 1. The letter designation after the dtex value indicates the color of the fiber: W - white; B - blue; G - green; Y - yellow. The 2.4 decitex white fibers (2.4W) were Type 190 fibers; 0.8 decitex white fibers (0.8W) were Type 195 fibers, and other fibers in the following table were Type 211 fibers. These hydrophobic fibers had surface finishes comprising a mixture of 50% polydimethylsiloxane available from OSi Specialties, Inc., Danbury, CT as grade Y12, 411 and 50% LUROL® AS-Y neutralized phosphate esters available from G.A. Goulston Co., Monroe, NC.

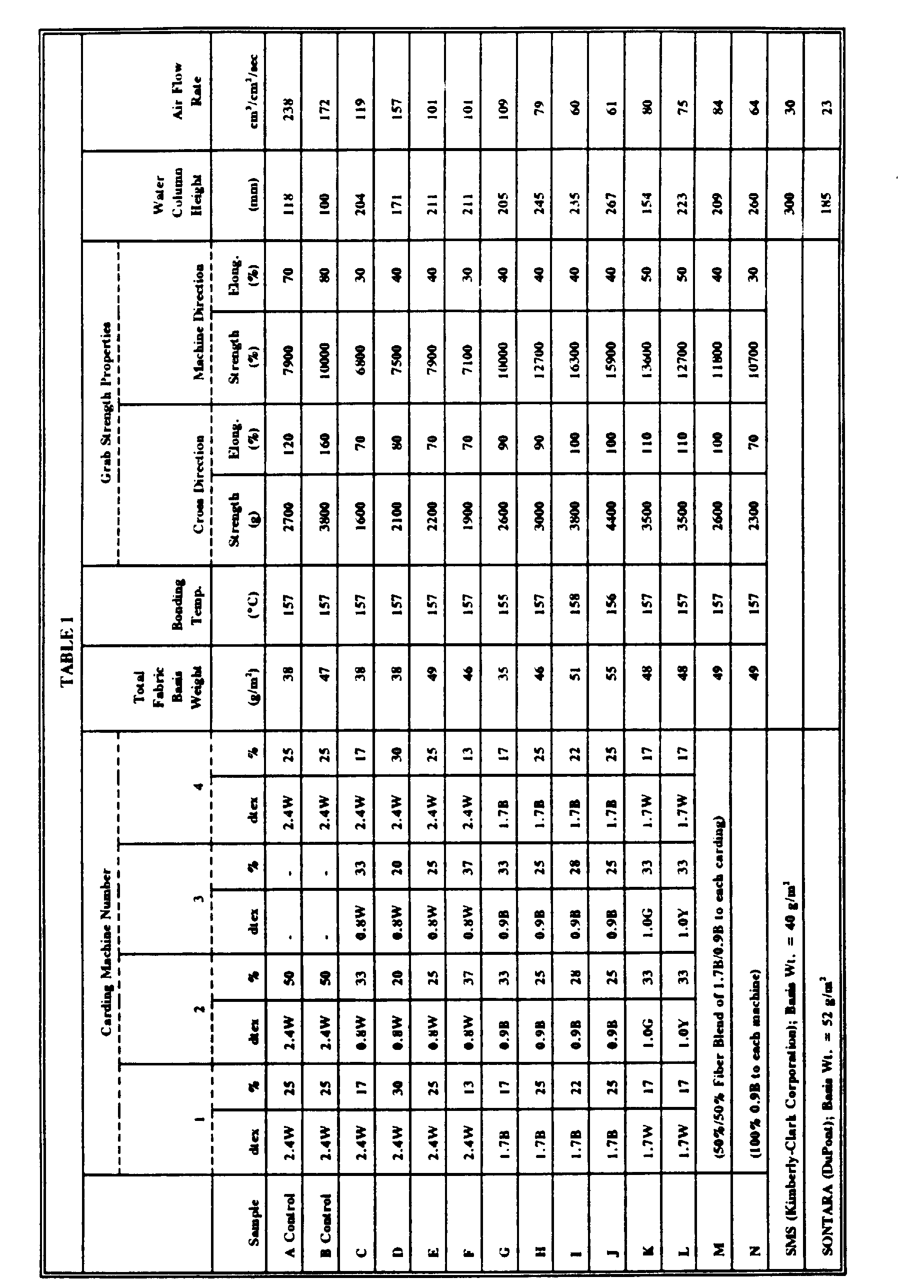

SMS is a nonwoven spun-bonded/melt blown/spun-bonded polypropylene composite fabric, available from Kimberly-Clark Corporation, Roswell, GA. SONTARA is a spunlaced polyester/wood pulp nonwoven fabric, available from Du Pont, Wilmington, DE.

Samples A and B are controls, and Samples C through N are examples of this invention. The data show the unique combination of improved water barrier properties and good air permeability obtained for the fabrics of this invention. Table 1 also indicates that the currently available commercial fabrics SMS and SONTARA exhibit low air permeability, even though they have good liquid barrier properties.

### Example 2

Nonwoven webs were produced by using a series of sequentially arranged carding machines as described in Example 1. The carding machines were supplied with polypropylene hydrophobic staple fibers Type 211 (available from Hercules Incorporated, Wilmington, DE) with differing or similar fineness as indicated in Table 2. The staple fibers were carded by the carding machine and carded webs were deposited on top of each other on a moving belt to form a layered web structure for inline thermal consolidation at a line speed of 13.7 meters/minute. The basis weight of individual webs was varied as indicated in Table 3 to make composite structures. In some samples a finish-free polypropylene spun-bonded fabric with 14 g/m² basis weight from American Nonwovens, Inc., Vernon, Alabama, USA, was incorporated prior to calender bonding. Samples O and R contained the spunbonded fabric at the bottom of the combined carded webs from carding machines 1 through 4 and in sample P the spunbonded fabric was fed between carding machines 2 and 3, thereby sandwiching the spunbonded fabric between two sets of the carded webs of this invention. Thermal bonding was carried out by using heated calendar rolls with a point pattern with a total bond area of 15%. The temperatures of the calender rolls are also indicated in Table 2. The first temperature is the temperature of the top calender and the second temperature is the temperature of the bottom calender. The decitex (dtex) and the percent of the total weight of staple fibers supplied to each carding machine are given in Table 2. The letter designation after the dtex indicates the color of the fiber: W-white; B-blue; G-green; Y-yellow. These hydrophobic fibers had the surface finish described in Example 1 comprising a mixture of polydimethylsiloxane and neutralized phosphate esters.

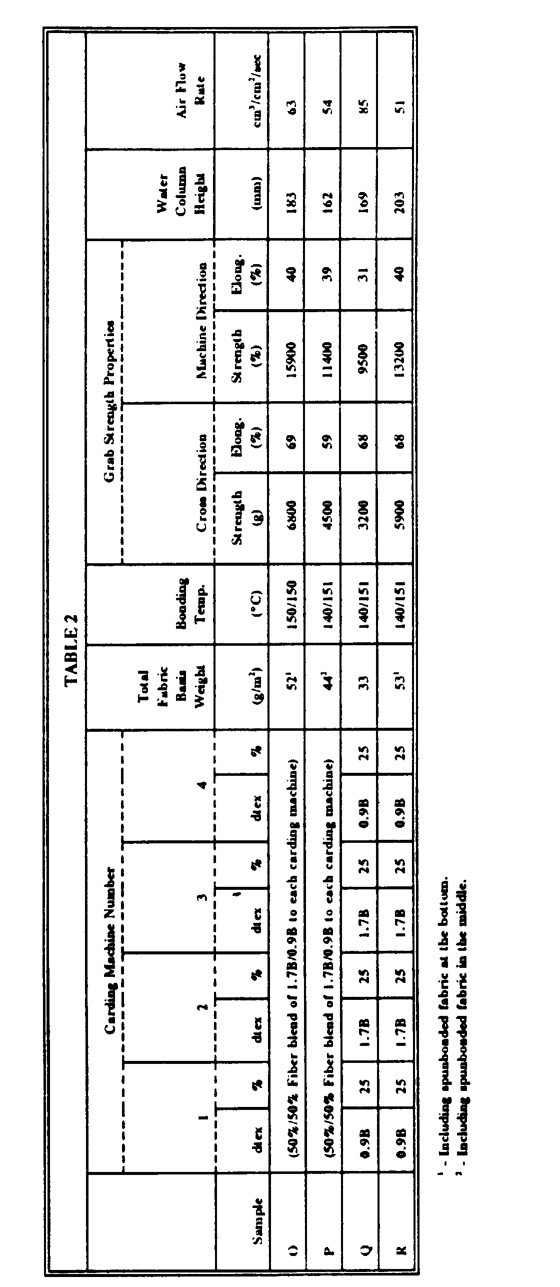

The data show the unique combination of improved water barrier properties and good air permeability obtained for the fabrics of this invention, and for laminates comprising the fabrics of this invention combined with a layer of spunbonded fabric.

It is not intended that the examples given here should be construed to limit the invention, but rather they are submitted to illustrate some of the specific embodiments of the invention. Various modifications and variations of the present invention can be made without departing from the scope of the appended claims.

## Claims

1. A fabric comprising at least one carded nonwoven web which comprises cardable polyolefin staple fibers characterized in that the web comprises at least 10% by weight, based on the total weight of cardable fibers, of cardable polyolefin staple fibers having a fiber fineness of 0.5 to 1.2 decitex, and in that the liquid strike-through resistance (mm of H₂O) of the fabric is at least 150 millimeters and the air permeability is at least 40.6 cm³/cm²/sec (80 cubic feet per minute).

2. The fabric of claim 1, further characterized in that the polyolefin fibers have a hydrophobic surface.

3. The fabric of claim 1 or 2, further characterized in that the fabric is thermally consolidated.

4. The fabric of any of the preceding claims, further characterized in that the air permeability is at least 50.8 cm³/cm²/sec (100 cubic feet per minute).

5. The fabric of any of the preceding claims, further characterized in that the cardable polyolefin staple fibers are homogeneously blended with other cardable fibers.

6. The fabric of any of claims 1 to 5, further characterized in that the polyolefin fibers are multicomponent fibers.

7. Use of the fabric of any of the preceding claims to make a laminate, characterized in that the laminate comprises at least one layer of the fabric and at least one layer of another nonwoven material.

8. The use of claim 7, further characterized in that the other nonwoven material comprises cardable fibers selected from the group consisting of polyamide, polyester, rayon, and cotton fibers.

9. The use of claim 7, further characterized in that the other nonwoven material comprises non-cardable fibers.

10. The use of any of claims 7 to 9, further characterized in that the laminate is thermally consolidated.

11. Use of the fabric of any of claims 1 to 6 to make a laminate characterized in that the laminate comprises at least one layer of the fabric of claim 1, and at least one layer of a film.

12. The use of claim 11, further characterized in that the film is a breathable polyethylene or polypropylene film.

13. The use of claim 11 or 12, further characterized in that the laminate is thermally consolidated.

## Patentansprüche

1. Textilstoff, umfassend mindestens eine kardierte, nicht-gewebte Bahn, die kardierbare Polyolefin-Stapelfasern umfasst, dadurch **gekennzeichnet,** dass die Bahn mindestens 10 Gew.%, in bezug auf das Gesamtgewicht der kardierbaren Fasern, kardierbare Polyolefinfasern mit einer Faserstärke von 0,5 bis 1,2 Decitex umfasst, und dass der Flüssigkeits-Durchdringwiderstand (mm H₂O) des Textilstoffs mindestens 150 mm und die Luftdurchlässigkeit mindestens 40,6 cm³/cm²/sek. (80 ft³/min.) beträgt.

2. Textilstoff gemäss Anspruch 1, weiterhin dadurch **gekennzeichnet,** dass die Polyolefinfasern eine hydrophobe Oberfläche haben.

3. Textilstoff gemäss Anspruch 1 oder 2, weiterhin dadurch **gekennzeichnet**, dass der Textilstoff thermisch verfestigt ist.

4. Textilstoff gemäss einem der vorhergehenden Ansprüche, weiterhin dadurch **gekennzeichnet,** dass die Luftdurchlässigkeit mindestens 50,8 cm³/cm²/sek. (100 ft³/min.) beträgt.

5. Textilstoff gemäss einem der vorhergehenden Ansprüche, weiterhin dadurch **gekennzeichnet,** dass die kardierbaren Polyolefin-Stapelfasern homogen mit anderen kardierbaren Fasern vermischt sind.

6. Textilstoff gemäss einem der Ansprüche 1 bis 5, weiterhin dadurch **gekennzeichnet,** dass die Polyolefinfasern mehrkomponentige Fasern sind.

7. Verwendung des Textilstoffs gemäss einem der vorhergehenden Ansprüche zur Herstellung eines Laminats, dadurch **gekennzeichnet,** dass das Laminat mindestens eine Schicht des Textilstoffs und mindestens eine Schicht eines anderen Vliesstoffs umfasst.

8. Verwendung gemäss Anspruch 7, weiterhin dadurch **gekennzeichnet,** dass der andere Vliesstoff kardierbare Fasern, ausgewählt aus Polyamid-, Polyester-, Kunstseide- und Baumwollfasern, umfasst.

9. Verwendung gemäss Anspruch 7, weiterhin dadurch **gekennzeichnet,** dass der andere Vliesstoff nicht-kardierbare Fasern umfasst.

10. Verwendung gemäss einem der Ansprüche 7 bis 9, weiterhin dadurch **gekennzeichnet,** dass das Laminat thermisch verfestigt wird.

11. Verwendung des Textilstoffs gemäss einem der Ansprüche 1 bis 6 zur Herstellung eines Laminats, dadurch **gekennzeichnet**, dass das Laminat mindestens eine Schicht eines Textilstoffs gemäss Anspruch 1 und mindestens eine Schicht einer Folie umfasst.

12. Verwendung gemäss Anspruch 11, weiterhin dadurch **gekennzeichnet,** dass die Folie eine atmungsaktive Polyethylen- oder Polypropylenfolie ist.

13. Verwendung gemäss Anspruch 11 oder 12, weiterhin dadurch **gekennzeichnet**, dass das Laminat thermisch verfestigt wird.

## Revendications

1. Tissu comprenant au moins un voile non tissé cardé qui comprend des fibres coupées de polyoléfine cardables, caractérisé en ce que le voile comprend au moins 10 % en poids, par rapport au poids total de fibres cardables, de fibres coupées de polyoléfine cardables ayant une finesse de fibres de 0,5 à 1,2 décitex, et en ce que la résistance à la pénétration des liquides (en mm de H₂O) du tissu est d'au moins 150 mm et en ce que la perméabilité à l'air est d'au moins 40,6 cm³/cm²/sec (80 pieds cube par minute).

2. Tissu selon la revendication 1, caractérisé en outre en ce que les fibres de polyoléfine ont une surface hydrophobe.

3. Tissu selon la revendication 1 ou 2, caractérisé en outre en ce que le tissu est renforcé thermiquement.

4. Tissu selon l'une quelconque des revendications précédentes, caractérisé en outre en ce que la perméabilité à l'air est d'au moins 50,8 cm³/cm²/sec (100 pieds cube par minute).

5. Tissu selon l'une quelconque des revendications précédentes, caractérisé en outre en ce que les fibres coupées de polyoléfine cardables sont mélangées de manière homogène avec d'autres fibres cardables.

6. Tissu selon l'une quelconque des revendications 1 à 5, caractérisé en outre en ce que les fibres de polyoléfine sont des fibres à constituants multiples.

7. Utilisation du tissu selon l'une quelconque des revendications précédentes pour fabriquer un stratifié, caractérisée en ce que le stratifié comprend au moins une couche du tissu et au moins une couche d'une autre matière non tissée.

8. Utilisation selon la revendication 7, caractérisée en outre en ce que l'autre matière non tissée comprend des fibres cardables choisies dans le groupe constitué des fibres de polyamide, de polyester, de rayonne et de coton.

9. Utilisation selon la revendication 7, caractérisée en outre en ce que l'autre matière non tissée comprend des fibres non cardables.

10. Utilisation selon l'une quelconque des revendications 7 à 9, caractérisée en outre en ce que le stratifié est renforcé thermiquement.

11. Utilisation du tissu selon l'une quelconque des revendications 1 à 6 pour fabriquer un stratifié, caractérisée en ce que le stratifié comprend au moins une couche du tissu selon la revendication 1 et au moins une couche d'un film.,

12. Utilisation selon la revendication 11, caractérisée en outre en ce que le film est un film de polyéthylène ou de polypropylène respirant.

13. Utilisation selon les revendications 11 ou 12, caractérisée en outre en ce que le stratifié est renforcé thermiquement.
